# EUROPÄISCHE PATENTSCHRIFT

(11) **EP 3 393 765 B1**
(45) Veröffentlichungstag und Bekanntmachung des Hinweises auf die Patenterteilung: **30.10.2019**
(21) Anmeldenummer: 16825729.3
(22) Anmeldetag: 20.12.2016
(51) Int. Cl.: B29C 70/38, B29C 67/00, B33Y 30/00, B29C 64/165, B29C 64/209, B29C 64/118, B29C 64/321

(54) **VORRICHTUNG UND VERFAHREN ZUR HERSTELLUNG EINES DREIDIMENSIONALEN GEGENSTANDES MIT EINER FASERZUFÜHREINRICHTUNG**
DEVICE AND METHOD FOR PRODUCING A THREE-DIMENSIONAL OBJECT WITH A FIBRE FEEDING DEVICE
DISPOSITIF ET PROCÉDÉ DE FABRICATION D'UN OBJET TRIDIMENSIONNEL PRÉSENTANT UN DISPOSITIF D'ALIMENTATION EN FIBRES

(30) Priorität: 22.12.2015 DE 102015122647
(43) Veröffentlichungstag der Anmeldung: 31.10.2018
(73) Patentinhaber: Arburg GmbH + Co KG, 72290 Loßburg (DE)
(72) Erfinder: DUFFNER, Eberhardt, 72181 Starzach (DE); BAUMANN, Florian, 72218 Wildberg (DE)
(74) Vertreter: Reinhardt, Harry
(86) Internationale Anmeldenummer: PCT/EP2016/081877
(87) Internationale Veröffentlichungsnummer: WO 2017/108758

(56) Entgegenhaltungen:
- WO-A1-2015/073992
- WO-A2-2013/017284

## Beschreibung

Die Erfindung betrifft eine Vorrichtung und ein Verfahren zur Herstellung eines dreidimensionalen Gegenstandes aus wenigstens einem verfestigbarem Material mit einer Faserzuführeinrichtung nach dem Oberbegriff der Ansprüche 1 bzw. 10.

Eine derartige Vorrichtung ist aus der WO 2015/073992 A1 bekannt, bei der eine Vorrichtung zur individuellen Herstellung von dreidimensionalen Strukturen mit faserverstärkten Elementen dargestellt wird. Dazu sind eine Austragseinheit für ein verfestigbares Material und eine beabstandet dazu angeordnete und relativ dazu bewegliche Faserzuführeinrichtung vorgesehen, die an der Austragseinheit montiert ist. Ein "manipulation tip" bewegt sich mit der Faser entweder seitlich oder in vertikaler z-Richtung.

In der DE 10 2011 109 369 A1 wird eine in der Spritzgießtechnik bekannte Plastifiziereinheit, die wie in der Spritzgießtechnik üblich das Material mischt, homogenisiert und aufbereitet, an einen unter Druck setzbaren Materialspeicher für die fluide Phase des verfestigbaren Materials angekoppelt. Zur Erzeugung eines Gegenstandes auf einem Objektträger wird dieses Material über eine Austragsöffnung in der Regel in Form von Tropfen aber auch als Strang ausgetragen. Aufgrund der Adhäsionskräfte des Materials, das standardmäßig ein ebenfalls in der Spritzgießtechnik übliches Material sein kann und kein spezielles Material für die Prototype-Herstellung sein muss, sind bei der gewünschten kleinen Tropfengröße von 0,01 bis 0,05 mm³ ein hoher Druck in einer Höhe von mehr als 10 bis 100 MPa und hohe Schmelztemperaturen erforderlich. Die Adhäsionskräfte führen im Unterschied zu einem Verfahren unter Einsetzung von Pulver zu einem Haftvermögen der Tropfen. Dennoch kann dieses Haftvermögen je nach Objekt nicht ausreichen, so dass dort bereits faserverstärkte Strukturen vorgeschlagen werden. Dabei wird eine Faser über eine bedarfsweise auf einer 5-Achsgeometrie angeordneten Faserzuführeinrichtung dem verfestigbaren Material beabstandet von der Austrittsöffnung für das verfestigbare Material zugeführt und gegebenenfalls ins Material eingebettet. Das Faserelement wird gegebenenfalls mit unterschiedlicher Orientierung zur Ausbildung einer dreidimensionalen Struktur zugeführt. Die Faserzuführeinrichtung ist zur Ausrichtung des Faserelements relativ zu einem Baufortschritt des Gegenstands bewegbar von der Austragseinheit getrennt angeordnet.

Aus der CA 2 204 792 A1 ist die Zuführung eines Faserelementes zur Einbettung in ein gesondert davon aufgebrachtes, verfestigbares Material bekannt, um dadurch einen faserverstärkten Gegenstand herzustellen. Dabei geht es vor allem um das gewebemäßige Einbringen von Glasfasern.

Aus der US 5,936,861 A ist es bekannt, ein zuvor imprägniertes Faserelement gemeinsam mit einem verfestigbaren Material an einem Gegenstand anzubringen. Die Zufuhr des verfestigbaren Materials erfolgt um das Faserelement herum gleichzeitig mit dem Ausbringen des Faserelements. Grundsätzlich kann das verfestigbare Material über eine weitere Austragseinheit auch gesondert ausgetragen werden, wobei ein imprägniertes Faserelement abgelegt wird und anschließend in das Material eingebettet wird.

Aus der US 2014/0328963 A1 ist zum dreidimensionalen Drucken zur Herstellung faserverstärkter Objekte die Zuführung von Fasern durch die Austrittsöffnung des für den Druck verwendeten Materials bekannt. Eine Relativbewegung zur Austragseinheit ist damit nicht möglich.

Die US 2002/0062909 A1 offenbart eine Faserzuführeinrichtung für die schichtweise Herstellung dreidimensionaler Gegenstände, wobei die Faserzuführung getrennt von der Materialzufuhr erfolgt. Die Faserzuführeinrichtung ist an der Austragseinheit angeordnet und relativ zum Baufortschritt des Gegenstandes bewegbar, jedoch nicht an der Austragseinheit montiert. (So auch WO 2014/193505 A1, US 6,153,034 A, DE 196 81 773 B4, US 2012/0159785 A1)

In der Kunststoffteileherstellung ist es bekannt, durch Spritzgießen oder Extrudieren in großen Losgrößen und Serien Teile unter Verwendung von Formwerkzeugen herzustellen. Der Vorteil des Kunststoff-Spritzgießens beruht insbesondere auf der hochgenauen Herstellung von komplexen Teilgeometrien, wobei die Funktionsvielfalt des Spritzgießverfahrens in optimaler Weise die Anforderungen an eine kostengünstige und wirtschaftliche Produktion von Kunststoffteilen abdeckt. Das Material wird über eine Plastifiziereinheit plastifiziert, homogenisiert und für den Einspritzvorgang aufbereitet.

Gleichzeitig besteht ein Bedarf nach Kunststoffteilen für Stückzahl 1 und kleine Losgrößen, wie z.B. Musterteile mit der Anforderung einer sehr kurzzeitigen Bereitstellung sowie Eigenschaften, die denen von spritzgegossenen Teilen ähnlich sind. Zur Herstellung solcher Teile gibt es Fertigungsverfahren, die weitläufig unter dem Begriff Prototyping und Rapid Manufacturing bekannt sind. Die Herstellung solcher Teile beruht werkzeuglos, d.h. ohne Formwerkzeuge, in den meisten Fällen auf der Erzeugung der Geometrie aus 3D-Daten. Diese Geometrien werden in unterschiedlichster Form durch entsprechende Prozesse wie Aufschmelzen von Pulverschichten durch Wärmeeintrag mittels Laser oder das lokale Vernetzen und Aushärten von Harzen oder auch im sogenannten Schmelzstrangverfahren additiv hergestellt.

In der Praxis hat sich herausgestellt, dass bei Herstellung von räumlichen Teilen wie Rapid-Prototyping-Teilen aus verfestigbarem Material, wie zum Beispiel üblichem thermoplastischem Material, regelmäßig auch Werkstückeigenschaften erwünscht sind, die durch die Basismaterialen an sich nicht ohne weiteres erzeugt werden können. Kunststoffe mit Kurzfasern sind zur Erzielung derartiger Werkstückeigenschaften nicht in der Lage. Faserverstärkte Materialien können hier zwar Abhilfe leisten, insbesondere beim Ausbringen von Tropfen wären jedoch die verarbeitbare Faserlänge und ihre verstärkende Wirkung zu gering.

Ausgehend von diesem Stand der Technik liegt der vorliegenden Erfindung die Aufgabe zugrunde, ein gezieltes Einbringen von Faserelementen zur Herstellung eines dreidimensionalen Gegenstandes mit verbesserten Werkstoffeigenschaften im generativen Verfahren zur Verfügung zu stellen.

Diese Aufgabe wird durch eine Vorrichtung mit den Merkmalen des Anspruches 1 sowie durch ein Verfahren mit den Merkmalen des Anspruches 10 gelöst. Vorteilhafte Weiterbildungen sind Gegenstand der abhängigen Patentansprüche. Die in den Patentansprüchen einzeln aufgeführten Merkmale sind in technologisch sinnvoller Weise miteinander kombinierbar und können durch erläuternde Sachverhalte aus der Beschreibung und durch Details aus den Figuren ergänzt werden, wobei weitere Ausführungsvarianten der Erfindung aufgezeigt werden.

Diese Aufgabe wird dadurch gelöst, dass an der Austragsöffnung der Austragseinheit eine Faserzuführeinrichtung montiert ist, die eine Ausrichtung des Faserelements relativ zur Austragseinheit erlaubt. Dadurch kann das Faserelement gezielt und orientiert zur Baurichtung bis zur Ablageposition am Gegenstand oder am Objektträger verbracht werden, um optimal, von der Materialaufbereitung unabhängig, die gewünschten Werkstoffeigenschaften zu erreichen. Zudem ist die Faserzuführeinrichtung an der Austragseinheit drehbeweglich über ein Lagerelement gelagert und mittels einer Antriebseinheit drehbar, so dass das Faserelement relativ zur Baurichtung und zur Austragseinheit ausgerichtet werden kann.

Vorzugsweise ist das Lagerelement durch einen Ring gebildet, der eine Verzahnung aufweist, die mit einem Abtriebsrad der Antriebseinheit in Wirkverbindung steht. Eine derartige Anordnung erlaubt eine Platz sparende Anordnung an der Austragseinheit.

Dazu ist vorzugsweise eine Verstelleinrichtung vorgesehen, die konzentrisch zur Austrittsöffnung der Austragseinheit ist, so dass eine beliebige Orientierung problemlos zu erreichen ist. Die Faserzuführeinrichtung ist damit an der Austragseinheit ortsfest, jedoch drehbar, ggf. auch über 360° hinaus oder auch mehrfach um sich selbst drehbar. Diese Drehbewegung dient wie auch der Faservorschub der Ausrichtung der Faser zum Materialaustrag und kann zur Baustrategie des Objektes auf dem Bautisch synchronisiert werden.

Vorzugsweise ist eine Zwangsführung für das Faserelement vorgesehen, an deren Ende eine Schneideinrichtung angeordnet ist. Dadurch kann das Faserelement gezielt bis zur Ablageposition am Gegenstand oder am Objektträger verbracht werden und dann nach Bedarf beschnitten werden.

Die Zwangsführung der Faserzuführeinrichtung ist an der Austragseinheit gelenkig gelagert und mittels einer weiteren Antriebseinheit bewegbar, um insbesondere einen Endkopf bedarfsweise platzieren zu können. Der Endkopf kann z.B. beim Start die Faser auf den Untergrund, d.h. den Objektträger oder dem bereits zum Teil hergestellten Gegenstand, andrücken und bedarfsweise mittels eines vorzugsweise vorgesehenen Heizelementes ankleben. Von dort aus kann das Faserelement z.B. gespannt werden, um es dann ins Material einzubetten.

Die Zwangsführung wird durch ein rohrförmiges Element, z.B. ein dünnes Kapillarröhrchen gebildet, um das biegeschlaffe Faserelement genau an seinem Bestimmungsort ablegen zu können. In dem rohrförmigen Element kann das Faserelement dann vorzugsweise mittels Luft oder eines Mikrovorschubs bis zur Aufbaustelle bzw. Ablageposition für das Faserelement befördert werden.

Verfahrensgemäß wird das verfestigbare Material aus einer Austragseinheit zum generativen Aufbau des Gegenstands ausgetragen und wenigstens ein Faserelement zum Einbetten in das ausgetragene, verfestigbare Material zugeführt, wobei die an der Austragseinheit montierte Faserzuführeinrichtung zur Ausrichtung des Faserelements relativ zu einem Baufortschritt des Gegenstands bewegt wird. Gleichzeitig kann das Faserelement relativ zur Austragseinheit bewegt werden. Dies erfolgt dadurch, dass die Faserzuführeinrichtung an der Austragseinheit mittels einer Antriebseinheit zur Ausrichtung des Faserelements gedreht wird, so dass gezielt eine optimale Zuführung des Faserelements erreicht werden kann, um die gewünschten Werkstoffeigenschaften zu erreichen.

Vorzugsweise erfolgt die damit einhergehende Drehung des Faserelements konzentrisch zur Austrittsöffnung der Austragseinheit. Dadurch kann störungsfrei das Faserelement platziert werden.

Bedarfsweise kann das Faserelement mittels einer weiteren Antriebseinheit in Richtung auf den Objektträger zu und vom Objektträger weg bewegt werden und/oder am herzustellenden Gegenstand angedrückt werden.

Weitere Vorteile ergeben sich aus den Unteransprüchen und der nachfolgenden Beschreibung eines bevorzugten Ausführungsbeispiels.

### Kurzbeschreibung der Figuren

Im Folgenden wird die Erfindung anhand eines Ausführungsbeispiels näher erläutert. Es zeigen:
- Fig. 1a, 1b: eine dreidimensionale Ansicht einer Vorrichtung zur Herstellung eines dreidimensionalen Gegenstandes mit einer Faserzuführeinrichtung mit und ohne Arbeitstisch,
- Fig. 2: eine dreidimensionale Darstellung einer Verstelleinrichtung für die Faserzuführeinrichtung,
- Fig. 3: die an der Austragseinheit vorgesehene Faserzuführeinrichtung mit zugehörigem Objektträger in einer Ansicht von vorn,
- Fig. 4: eine Darstellung gemäß Fig. 3 in einer Ansicht von links,
- Fig. 5: ein Schnitt durch die Austragseinheit nach Linie V-V von Fig. 3,
- Fig. 6: einen Schnitt durch die Austragseinheit nach Linie VI-VI von Fig. 3,
- Fig. 7: einen vergrößerten Ausschnitt der Austragseinheit im Bereich der Faserzuführeinrichtung,
- Fig. 8a - 8c: eine Draufsicht auf die Herstellung eines mit einem Faserelement verstärkten Gegenstandes,
- Fig. 9a - 9f: schematische Darstellungen verschiedener Geometrien zur Einbettung von Faserelementen.

### Ausführliche Beschreibung bevorzugter Ausführungsbeispiele

Die Erfindung wird jetzt beispielhaft unter Bezug auf die beigefügten Zeichnungen näher erläutert. Allerdings handelt es sich bei den Ausführungsbeispielen nur um Beispiele, die nicht das erfinderische Konzept auf eine bestimmte Anordnung beschränken sollen. Bevor die Erfindung im Detail beschrieben wird, ist darauf hinzuweisen, dass sie nicht auf die jeweiligen Bauteile der Vorrichtung sowie die jeweiligen Verfahrensschritte beschränkt ist, da diese Bauteile und Verfahren variieren können. Die hier verwendeten Begriffe sind lediglich dafür bestimmt, besondere Ausführungsformen zu beschreiben und werden nicht einschränkend verwendet. Wenn zudem in der Beschreibung oder in den Ansprüchen die Einzahl oder unbestimmte Artikel verwendet werden, bezieht sich dies auch auf die Mehrzahl dieser Elemente, solange nicht der Gesamtzusammenhang eindeutig etwas Anderes deutlich macht.

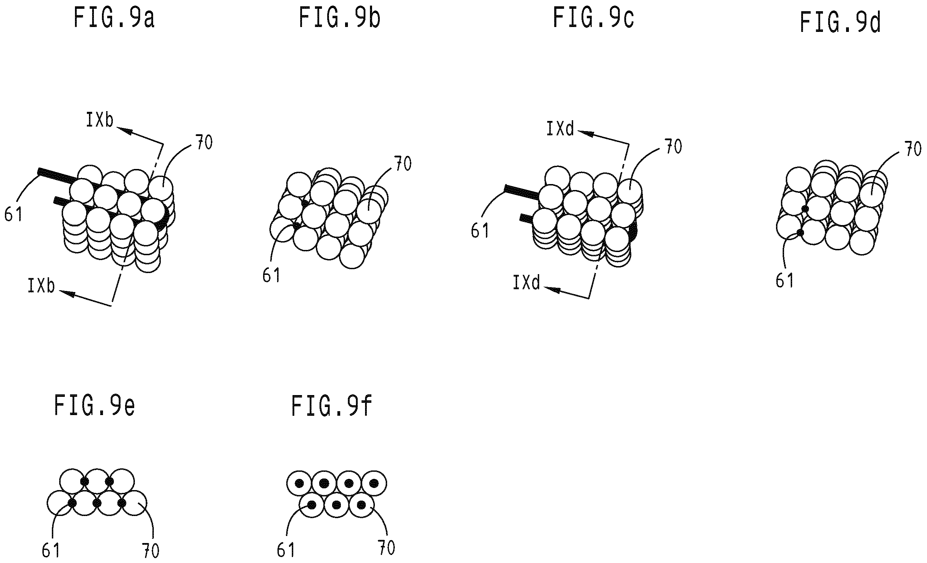

Die Figuren zeigen eine Vorrichtung zur Herstellung eines dreidimensionalen Gegenstandes 50 aus wenigstens einem fluidphasigen verfestigbarem Material, das entweder im Ausgangszustand in einer fluiden Phase vorliegt oder verflüssigt werden kann. Das Austragen des verfestigbaren Materials kann sequenziell in Form von diskontinuierlichen Tropfen 70 (Fig. 9a) aus einer Austrittsöffnung 12a mindestens einer taktbaren, mittels eines Verschlusselements 14 verschließbaren Austragseinheit 12 erfolgen. Ein hierfür verwendbares Verschlusselement ist aus der EP 2 266 782 B1 bekannt. Ebenso kann das verfestigbare Material strangweise aus einer Austragseinheit ausgetragen werden. Kombinationen beider Austragverfahren zur schnelleren Bauteilbildung sind insbesondere bei Verwendung mehrerer Austragseinheiten denkbar. Es ist auch denkbar, bei Einsatz mehrerer Austragseinheiten 12, einen Strangaustrag über eine Austragseinheit und einen tropfenmäßigen Austrag über eine andere Austragseinheit vorzunehmen. Grundsätzlich können also auch mehrere Austragseinheiten mit ein oder mehreren Austragsköpfen verwendet werden.

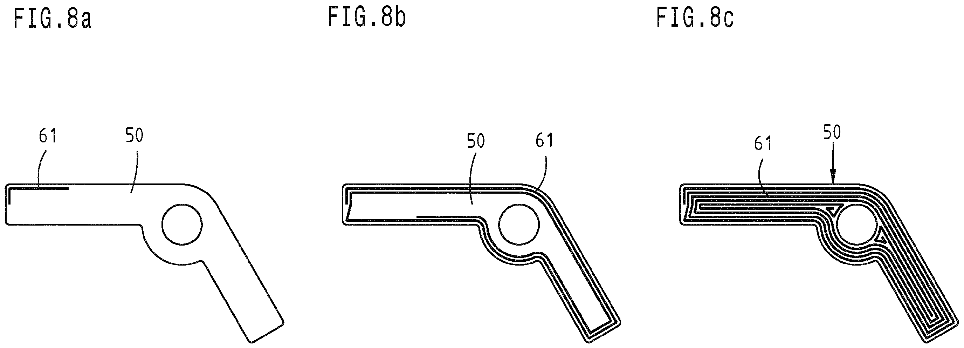

Durch das Austragen des verfestigbaren Materials erfolgt ein generativer Aufbau des Gegenstands 50, wie dies zum Beispiel in den Figuren 8a bis 8c dargestellt ist. Deutlich ist zu erkennen, wie dabei ein Faserelement 61 während des von Fig. 8a bis Fig. 8b fortschreitenden Aufbaus des Gegenstands 50 eingebettet wird. Unter einem generativen Aufbau wird ein allmählicher, das Bauteil erzeugender Aufbau zum Beispiel Tropfen um Tropfen und/oder Schicht für Schicht eines Gegenstands verstanden. Die Austragseinheit 12 ist in den Figuren lediglich schematisch dargestellt. Ihr Aufbau ist an sich aus der EP 1 886 793 A1 bekannt und wird hiermit unter Verweisung auf diese Schrift in Bezug genommen. Im Detail zeigt diese Schrift den Aufbau eines dreidimensionalen Gegenstandes 50 durch sequenzielles Austragen von Tropfen oder Strängen aus der Austragseinheit 12. Schicht für Schicht wird so der Gegenstand 50 auf einem Objektträger 13 durch die Tropfen 70 erstellt. Die Austragseinheit 12 steht mit einem Materialspeicher 18 in Verbindung, dem über eine Druckerzeugungseinheit von einer Aufbereitungseinheit aufbereitetes Material unter Druck stehend zugeführt wird. Über die taktbare Austrittsöffnung 12a werden die Tropfen 70 und/oder Stränge in einen Bauraum gefördert, in dem der Gegenstand 50 auf dem Objektträger 13 aufgebaut wird. Vorzugsweise ist die Austragseinheit 12 Teil einer an sich in der Spritzgießtechnik dem Grundsatz nach bekannten Plastifiziereinheit, die zugleich auch den unter Druck setzbarem Materialspeicher 18 zum Einbringen der fluiden Phase umfasst. Wie in der Spritzgießtechnik bereitet eine derartige Plastifiziereinheit das Material auf, homogenisiert und mischt es. Der Druck auf die fluide Phase im Materialspeicher erzeugt in direkter Kopplung den Tropfen 70 oder den Strang.

Da es für die Verwendung der Vorrichtung und auch für das Verfahren wesentlich ist, wird hier auf die Eigenschaft des Materials eingegangen. Das fluidphasige verfestigbare Material ist ein plastifiziertes Material wie zum Beispiel Silikon oder ein plastifizierbares Material wie Kunststoff oder auch pulverförmige Materialien, wobei es im Wesentlichen darauf ankommt, das das Material in eine fluide Phase überführbar ist. Das Material kann auch ein unter Wärme reversibel aufschmelzbares und damit recycelbares Material sein. Beliebige andere Materialien können verwendet werden, sofern diese Materialien durch die Vorrichtung plastifizierbar und vor allem durch die wenigstens eine Austragseinheit 12 austragbar sind. Als bedarfsweise faserverstärktes, verfestigbares Material kommen sämtliche Materialien wie Harze, Thermoplaste, Silikone und andere Trägermaterialien in Betracht, die einen generativen Schichtaufbau ermöglichen. Da vorzugsweise eine in der Spritzgießtechnik bekannte Plastifiziereinheit zur Aufbereitung, Homogenisierung und Mischung des verfestigbaren Materials als plastifiziertes oder plastifizierbares Material verwendet wird, kann ein standardmäßig erhältliches oder beim Spritzgießen vorhandenes Material zur Herstellung der Teile verwendet werden. Ein spezielles Sondermaterial ist damit nicht erforderlich.

Das fluidphasige verfestigbare Material weist einen sogenannten laminaren Quellfluss auf. In den Quellfluss geht u.a. die Anlagerung der Schmelze an der Wandung ein. Dies wird am deutlichsten bei einem Blick in die Erkenntnisse der Spritzgießtechnik. Bei der Formfüllung eines einfachen, rechteckigen Kanals wird die Schmelze über einen sogenannten Angusspunkt eingespritzt und beginnt sich von diesem Punkt mit geschlossenen Fließfronten kreisförmig auszubreiten, bis sie die gesamte Breite der Kavität ausfüllt. Einige Zeit danach kann der Bereich zwischen dem Einlauf und der Fließfront als nahezu ausgebildet betrachtet werden. An der Fließfront selbst herrscht eine besondere Strömungssituation, der "Quellfluss", da die Stromlinien in diesem Bereich wie eine Quelle erscheinen, wenn man sie in Bezug auf ein mitbewegtes Koordinatensystem betrachtet.

Der laminare Quellfluss ist für die Erzeugung von wie hier auf einen Bauraum ,ausgerichteten' Tropfen auf Grund seiner laminaren Ausbildung einerseits von Vorteil, andererseits bestehen vor allem bei der Ausbildung kleiner Tropfen genau hier auch die Probleme, die eine Umsetzung mit aus der Spritzgießtechnik bekannten Einrichtungen und Materialien erschweren. Die Wandhaftung führt dazu, dass sich die Massen nur schwer zu Tropfen mit gewünschten kleinen Volumen, vorzugsweise im Bereich kleiner gleich 1 mm³ und gewünschter Fluggeschwindigkeit ausbilden lassen, andererseits ist eine entsprechend hohe Viskosität des Materials gerade für die Ausbildung einer geeigneten Tropfenform und die Einbindung einer Faserverstärkung von Bedeutung. Die dynamische Viskositätszahl des verfestigbaren Materials liegt zwischen 100 und 10000 Pa s, so dass entsprechende Drücke von mehr als 10 bis 100 MPa, insbesondere zur Erzielung kleiner Tropfenvolumen erforderlich sind.

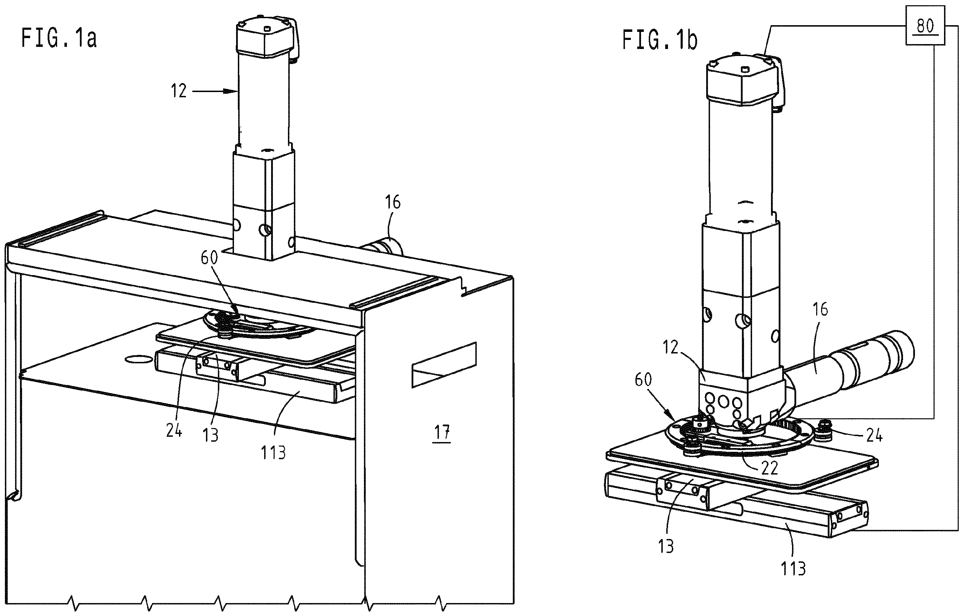

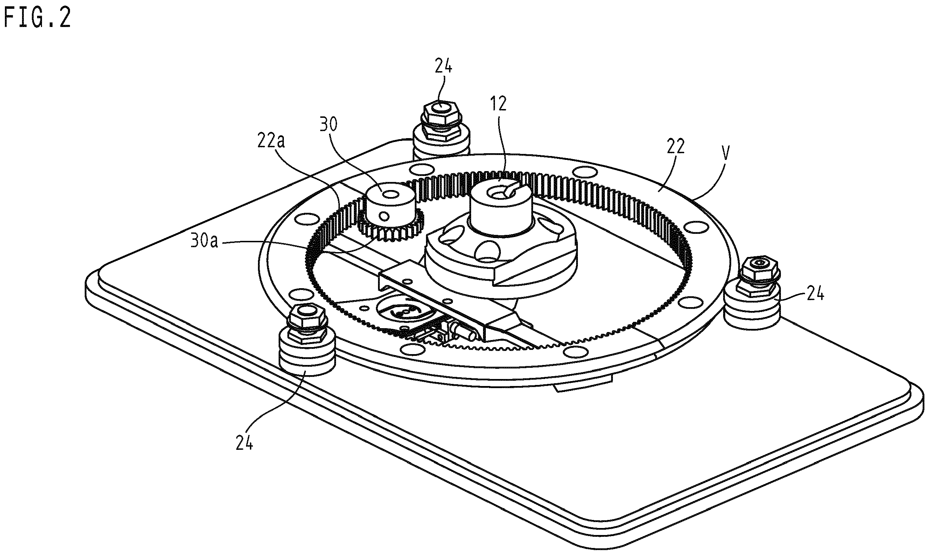

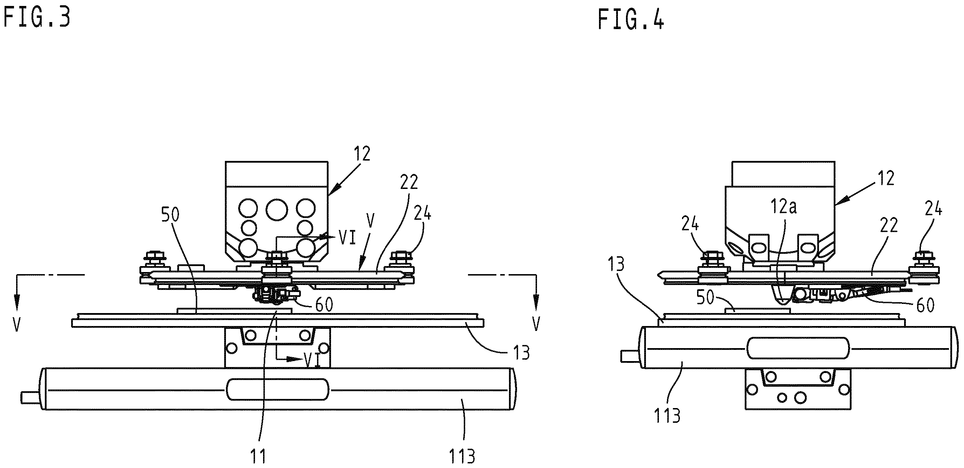

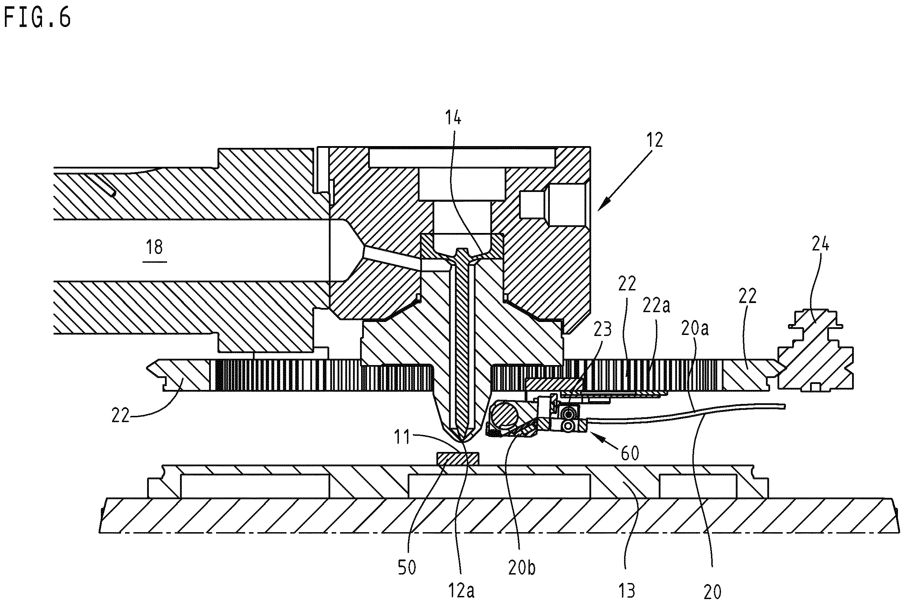

Die Vorrichtung weist gemäß Fig. 6 einen schematisch dargestellten Materialspeicher 18 auf, in dem das verfestigbare Material in der fluiden Phase vorliegt, das von einer Druckerzeugungseinheit 16 (Fig. 1a) aufbereitet ist. Das verfestigbare Material wird mittels mindestens einer Austragseinheit 12 in Richtung eines Objektträgers 13 für den herzustellenden Gegenstand generativ aus dem Materialspeicher 18 ausgetragen. Dabei wird das verfestigbare Material an einer Aufbaustelle 11 am Objektträger 13 und/oder am herzustellenden dreidimensionalen Gegenstand 50 aufgetragen. Mittels wenigstens einer Faserzuführeinrichtung 60 wird gemäß Fig. 2, 3 wenigstens ein Faserelement 61 an die Aufbaustelle 11 bzw. Ablageposition zum Einbetten des Faserelements in das von der Austragseinheit 12 ausgetragene, verfestigbare Material gebracht, wobei die Faserzuführung von der Austrittsöffnung 12a für das verfestigbare Material beabstandet ist. Verschiedene Austragsköpfe können dem Aufbauort dabei verschiedene Baumaterialien und Fasertypen für die Herstellung des Gegenstands 50 liefern. Dadurch können z.B. auch hybride Bauteile hergestellt werden oder es können verschiedenen Faserorientierungen erzeugt oder fast gar "gewebt" werden. So ist es beispielsweise denkbar, in einer Schicht ein Kreuzgeflecht an Fasern zu erzeugen.

Ein "Faserelement" ist dabei eine zur Faserverstärkung einzubettende Faser, deren Länge größer als die kleinste Austragsmenge der Austragseinheit 12, also größer als der Durchmesser eines Tropfens 70, vorzugsweise größer als der Durchmesser mehrerer Tropfen ist. Die Dicke des einzubettenden Faserelements 61 oder Faserstrangs ist dagegen vorzugsweise kleiner oder maximal gleich dem Durchmesser der Tropfen 70. Als Fasermaterial kommen z.B. Glas, Kohle, Aramid oder Naturfasern in Betracht.

Steuermittel 80 sorgen gemäß Fig. 1b für die Steuerung der Bewegung wenigstens eines der Elemente umfassend die Austragseinheit 12, die Faserzuführeinrichtung 60 sowie den Objektträger 13 oder den dreidimensionalem Gegenstand 50 relativ zu wenigstens einem anderen dieser Elemente, sodass eine Relativbewegung entsteht, die den Aufbau des Gegenstands gestattet. Fig. 1a zeigt die an einem Maschinentisch 17 angeordnete Vorrichtung. Der Gegenstand 50 kann auf einer Mehrachsgeometrie gefertigt werden. Eine derartige Mehrachsgeometrie ist durch den x-y-z Bautisch 113 in Fig. 3 und 4 dargestellt, auf dem sich der Objektträger 13 befindet.

Gemäß den Figuren 2 und 3 ist an der Austragsöffnung 12a der Austragseinheit 12 die Faserzuführeinrichtung 60 vorgesehen, die vorzugsweise eine Zwangsführung 20 für das Faserelement 61 bis zur Ablageposition aufweist. Gemäß Fig. 6 ist am Ende der Zwangsführung 20 eine Schneideinrichtung 21 angeordnet. Die gesamte Faserzuführeinrichtung 60 ist an der Austragseinheit 12 montiert und mit ihr bewegbar. Das Faserelement 61 wird quasi als "Endlosfaser" eingefädelt und zugeführt. Endlos bedeutet in diesem Zusammenhang, dass die zu verarbeitende Faserlänge grundsätzlich größer ist als ein einzelner von der Vorrichtung ausgebrachter Tropfen 70 und bedarfsweise auch sich durch den hergestellten Gegenstand ziehen kann. Die Zwangsführung 20 wird als Zuführung/Führung des Faserelementes 61 bis zur Aufbaustelle 11 bzw. Ablageposition am Objektträger 13 und/oder am herzustellenden dreidimensionalen Gegenstand 50 durch ein rohrförmiges Element, vorzugsweise durch ein dünnes Kapillarröhrchen gebildet. Das rohrförmige Element 20a dient dazu, dass biegeschlaffe Faserfilament als Faserelement 61 dorthin zu bekommen, wo es hin soll. Ein Nachschieben des Faserelementes 61 kann entweder über Einblasen von Heißluft in das rohrförmige Element 11 oder über einen Mikrovorschub 23 mit Förderrollen an einen Endkopf 20b erfolgen.

Die Faserzuführeinrichtung 60 ist an der Austragseinheit 12 angeordnet ist und zur Ausrichtung des Faserelements relativ zu einem Baufortschritt des Gegenstands und relativ zur Austragseinheit bewegbar. Vorzugsweise ist die Faserzuführeinrichtung 60 zum Zuführen des wenigstens einen Faserelements 61 an die Aufbaustelle 11 zum Einbetten des Faserelements in das von der Austragseinheit 12 ausgetragene, verfestigbare Material von der Austrittsöffnung 12a für das verfestigbare Material beabstandet. Die Faserzuführeinrichtung 60 ist an der Austragseinheit 12 drehbeweglich gelagert und mittels einer Antriebseinheit 30 drehbar. Dargestellt ist dabei in den Figuren eine abgesehen von ihrer Drehbarkeit feststehende Faserzuführeinrichtung 60, die mit einem ggf. auch auf einer Mehrachsanordnung mit z.B. fünf Achsen, wie sie aus der DE 10 2011 109 369 A1bekannt ist, stehenden Objektträger 13 zusammenarbeitet, so dass eine Faserzuführung nicht nur zweidimensional, sondern auch dreidimensional erfolgen kann, d.h. ein Faserelement kann auch im Raum durch den dabei aufgebauten dreidimensionalen Gegenstand 50 geführt werden. Denkbar ist ebenso die Faserzuführeinrichtung 60 oder auch die Faserzuführeinrichtung 60 und den Objektträger 13 jeweils auf einer Mehrachsgeometrie anzuordnen, um eine dreidimensionale Faserzuführung zu bewirken. Durch all diese Möglichkeiten kann eine dreidimensionale Verstärkung des Gegenstands 50 erreicht werden.

Um die Drehbarkeit zu erreichen, ist die Zwangsführung 20 der Faserzuführeinrichtung 60 und damit auch die Faserzuführeinrichtung 60 selbst über ein Lagerelement 22 einer Verstelleinrichtung V an der Austragseinheit 12 gemäß Fig. 2 gelagert. Das Lagerelement 22 ist vorzugsweise konzentrisch zur Austrittsöffnung 12a der Austragseinheit 12 angeordnet. Der Antrieb erfolgt über ein Abtriebsrad 30a der Antriebseinheit 30, das z.B. eine Außenverzahnung aufweist, die mit einer Verzahnung 22a des Lagerelementes 22 in Verbindung steht. Das Lagerelement 22 ist dabei als ein Ring ausgebildet, so dass die konzentrische Anordnung problemlos und Platz sparend umgesetzt werden kann. Alternative Antriebe z.B. über einen Reib- oder Riemenantrieb sind anstelle des Zahnantriebs ebenfalls denkbar. Auf dem Lagerelement 22 kann, wie z.B. in Fig. 4 oder 6 zu erkennen, die Zuleitung des Faserelements mittels des rohrförmigen Elementes 20a erfolgen und die Zwangsführung 20 und die Schneideinrichtung 21 angeordnet sein. Das Lagerelement 22 ist an seiner Außenseite in den Lagerungen 24 geführt, die ihrerseits auf einer Platte 25 gelagert sind, die an der Austragseinheit 12 befestigt ist.

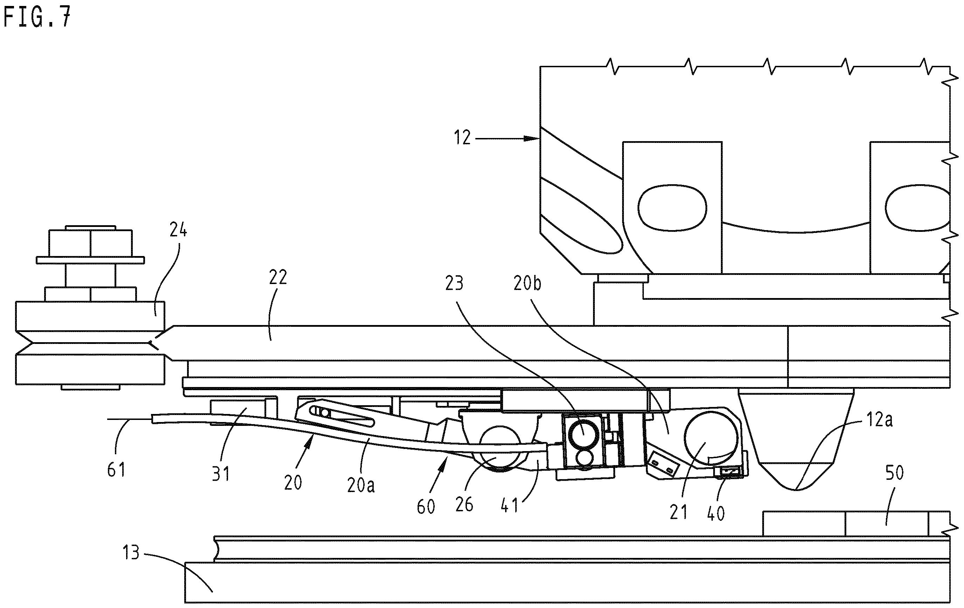

Vorzugsweise ist die Zwangsführung 20 der Faserzuführeinrichtung 60 an der Austragseinheit 12 gelenkig gelagert und mittels einer weiteren Antriebseinheit 31 bewegbar, die vorzugsweise als Servoantrieb ausgebildet ist. Die gelenkige Lagerung erfolgt gemäß Fig. 6 und 7 um die Achse 26. Wird der weitere Antrieb 31 betätigt, bewegt sich ein Betätigungselement in der Langlochführung des Hebels 27, so dass der Endkopf 20b, in dem die Zwangsführung 20 im Bereich der Austrittsöffnung 12 für das verfestigbare Material endet, wie eine Wippe um die Achse 26 beweglich ist und bei dieser Betätigung nach unten in Richtung auf den Objektträger 13 bewegt wird. Damit kann mittels der weiteren Antriebseinheit 31 der Endkopf 20b in Richtung auf den Objektträger 13 zu und vom Objektträger 13 weg bewegt werden. Über die Beweglichkeit des Endkopfes 20b, kann dieser z.B. vertikal bewegt werden, um beim Start das Faserelement 61 am Untergrund zu befestigen oder eben während des Einbettens mit Tropfen 70 das Faserelement 61 auf die gerade zu bauende Bauteilfläche oder gar das angrenzende "Tropfental" zu drücken, während bei nicht ausgeschwenktem Hebel 27 das Bauteil sich frei unter der Zuführeinrichtung bewegen kann.

Zusätzlich kann ein Heizelement 40 am Endkopf 20b vorgesehen oder integriert sein werden, so dass mittels Heißklebetechnik das Faserelement 61 befestigt wird. Ebenso ist das Schneidelement 21 im Endkopf 20b integriert. Dieses Schneidelement 21 kann durch einen Mikroschneider gebildet werden, der z.B. als magnetisch betätigtes Messer ausgebildet ist, um die Faser am Ende einer Lage/Bahn oder auch abschnittsweise abschneiden zu können. Der gesamte Endkopf 20b kann frei in Baurichtung ausgerichtet werden. Dazu ist das gesamte System vertikal ortsfest mit der Austragseinheit 12 verbunden und bewegbar, gegenüber der Austragseinheit 12 jedoch grundsätzlich beliebig drehbar. Grundsätzlich ist es auch denkbar, eine Drehbarkeit um einen beliebigen Winkel ggf. auch mehrfach um 360° vorzusehen.

Durch die Zuordnung der Faserzuführeinrichtung 60 zur Austrittsöffnung 12a der Austragseinheit 12 kann die Faser gut in das verfestigbare Material eingebettet werden. Es ist dabei ebenso möglich, dass Faserelement 61 vor dem vorzugsweise tropfenförmig erfolgenden Auftrag des verfestigbaren Materials zu positionieren und dann mit den Kunststofftropfen einzubetten. Es ist aber auch möglich, die Faser direkt unter den Tropfen 70 oder zwischen zwei Tropfen 70 einzubetten (s.a. Fig. 9a bis 9f). Wie genau diese Anordnung erfolgt, wird vor allem durch die beim herzustellenden Gegenstand 50 gewünschten Eigenschaften bestimmt. Das Faserelement 61 kann bedarfsweise auch vor seiner Zuführung in einer Flüssigkeit getränkt werden, die die Werkstoffeigenschaften des Gegenstands oder den Herstellungsprozess des Gegenstands unterstützt. So kann diese Tränkung/Schlichtung dazu führen, dass sich Faserelement 61 und Bauwerkstoff besonders gut verbinden, um eine noch bessere mechanische Festigkeit zu erreichen oder, dass sie dazu beiträgt, dass der Herstellungsprozess beschleunigt wird.

Fig. 7 zeigt in einer Seitenansicht die Austragseinheit 12, in der das Lagerelement 22 für die Lagerung vor allem des Endkopfes 20b und des rohrförmigen Elementes 20a der Zwangsführung 20 befestigt ist. Erkennbar ist auch der Andrückhebel 41, mit dem mittels der weiteren Antriebseinheit 31 die Kippbewegung und damit auch die in der Figur vertikale Bewegung des Endkopfes 20b erfolgt. Am Endkopf 20b endet das rohrförmige Element 20a. Am Endkopf ist ferner das Heizelement 40 und die Schneideinrichtung 21 zu erkennen.

Hebel 27 und Heizelement 40 aber auch die Zuführung von Heißluft durch die Zwangsführung 20 können auch dazu genutzt werden, um das Faserelement 61 gezielt vorzuwärmen, damit sie sich mit ihrer Schlichte besser mit dem Baumaterial verbindet/getränkt wird. Mit dem Hebel 27 kann auch während des gesamten Bauprozesses das Faserelement 61 angedrückt werden, um eine bessere Haftung an der bereits erstellten Unterschicht zu erreichen.

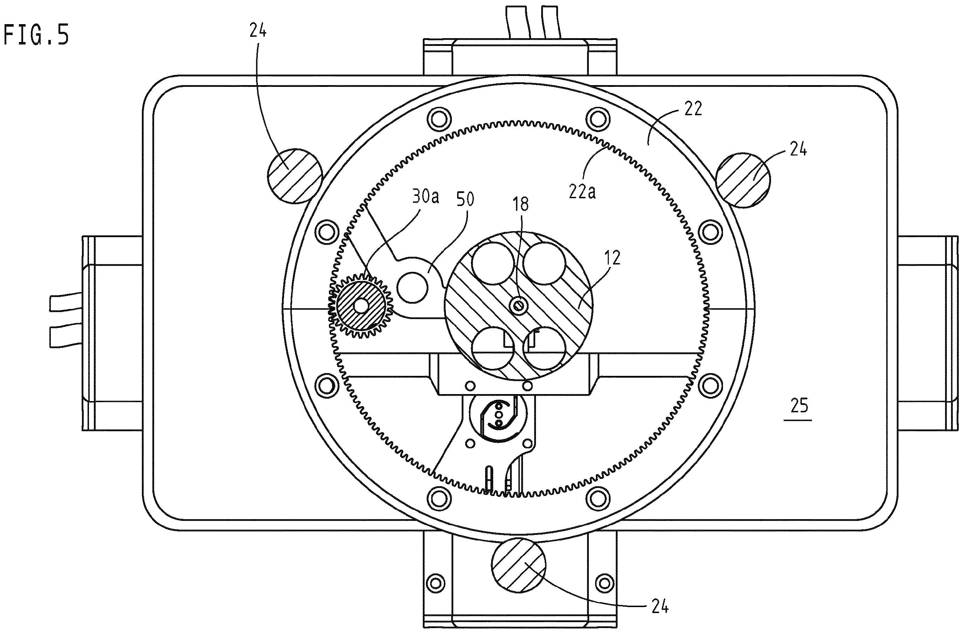

Verfahrensgemäß wird der dreidimensionale Gegenstand 50 aus wenigstens einem fluidphasigen, verfestigbarem Material hergestellt, das aus wenigstens einer Austrittsöffnung 12a mindestens einer Austragseinheit 12 zum generativen Aufbau des Gegenstands 50 ausgetragen wird. Um die gewünschten Werkstoffeigenschaften zu erreichen, wird mittels wenigstens einer Faserzuführeinrichtung 60 wenigstens ein Faserelement 61 zum Einbetten des Faserelements in das ausgetragene, verfestigbare Material zugeführt. Dabei ist die Faserzuführeinrichtung 60 so angeordnet, dass das Faserelement 61 relativ zum Baufortschritt des Gegenstands und relativ zur Austragseinheit 12 bewegt wird kann und damit gezielt ausgerichtet werden kann. Über die Verstelleinrichtung V ist die Faserzuführeinrichtung 60 an der Austragseinheit 12 mittels der Antriebseinheit 30)zur Ausrichtung des Faserelements drehbar. Vorzugsweis erfolgt die Zuführung des Faserelements 61 gemäß Fig. 5 konzentrisch zur Austrittsöffnung 12a der Austragseinheit 12.

Mittels einer weiteren Antriebseinheit 31 das Faserelement 61 in Richtung auf den Objektträger 13 zu und vom Objektträger 13 weg bewegbar und/oder am herzustellenden Gegenstand 50 andrückbar ist, was über den oben beschriebenen Hebel 27 erfolgt. Mittels einer Schneideinrichtung 21 wird das Faserelement 61 an der Austragsöffnung 12a abgeschnitten. Durch einen geeigneten Faservor- und - nachlauf und rechtzeitiges Abschneiden kann damit sichergestellt werden, dass kein Faserelement aus dem fertigen Gegenstand 50 heraus steht.

Das Faserelement 61 wird z.B. mittels Luft oder eines Mikrovorschubs in einer Zwangsführung 20 befördert. Hebel 27 und ein Heizelement 40 bzw. Heißluft in der Zwangsführung 20 können auch dazu genutzt werden, das Faserelement 61 z.B. gezielt vorzuwärmen, damit sie sich mit ihrer Schlichte besser mit dem Baumaterial verbindet. Mit dem Hebel 27 kann auch während des gesamten Bauprozesses das Faserelement 61 angedrückt werden, um eine bessere Haftung an der bereits gebauten Unterschicht zu erreichen

Dadurch, dass die Faserzuführeinrichtung 60 unabhängig von der Austragseinheit 12 bewegbar oder besser ausrichtbar ist, können gemäß den Fig. 9a bis 9f verschiedene Geometrien zur Einbettung der Faserelemente 61 umgesetzt werden. Gemäß fig. 9a und 9b, die eine Ansicht nach Linie 9b-9b von Fig. 9a zeigt, kann das Faserelement auf Lücke mit den Tropfen 70 angeordnet werden. Dabei kann, muss aber nicht das Faserelement 61 auch durch benachbarte Tropfenreihen mäandern. Gemäß Fig. 9c und 9d, die eine Ansicht nach Linie 9d-9d von Fig. 9c darstellt, kann das Faserelement 61 unmittelbar zwischen benachbarte Tropfen 70 eingelegt werden, so dass sich die Tropfen 70 an das Faserelement anschmiegen. Gemäß Fig. 9e können die Werkstoffeigenschaften noch dadurch gesteigert werden, dass bei der Ausbringung des Faserelements 61 die Tropfen 70 noch reihenweise zueinander versetzt werden. Gegenüber der Ausführungsform von Fig. 9d ergibt sich dadurch eine höhere Packungsdichte der Tropfen 70 mit zwischen den Tropfen eingelegtem Faserelement 61. Gemäß Fig. 9f kann das Faserelement 61 aber auch in die von der Austragseinheit 12 ausgetragenen Tropfen 70 des verfestigbaren Materials eingebettet werden.

### Bezugszeichenliste

- 11: Aufbaustelle
- 12: Austragseinheit
- 12a: Austrittsöffnung
- 13: Objektträger
- 14: Verschlusselement
- 16: Druckerzeugungseinheit
- 17: Maschinentisch
- 18: Materialspeicher
- 20: Zwangsführung
- 20a: rohrförmiges Element
- 20b: Endkopf
- 21: Schneideinrichtung
- 22: Lagerelement
- 22a: Verzahnung
- 23: Achse für Förderung des Faserelements
- 24: Lagerung für 22
- 25: Platte
- 26: Achse für Lagerung von 27
- 27: Hebel
- 30: Antriebseinheit
- 30a: Abtriebsrad
- 31: weitere Antriebseinheit
- 40: Heizelement
- 41: Andrückhebel
- 50: Gegenstand
- 60: Faserzuführeinrichtung
- 61: Faserelement
- 70: Tropfen
- 80: Steuermittel
- 113: XYZ-Bautisch
- V: Verstelleinrichtung

## Patentansprüche

1. Vorrichtung zur Herstellung eines dreidimensionalen Gegenstandes (50) aus wenigstens einem fluidphasigen, verfestigbarem Material mit
- mindestens einer Austragseinheit (12) mit wenigstens einer Austrittsöffnung (12a) zum generativen Austragen des verfestigbaren Materials zum Aufbau des Gegenstands (50),
- wenigstens einer Faserzuführeinrichtung (60) zum Zuführen wenigstens eines Faserelements (61) zum Einbetten des Faserelements in das von der Austragseinheit (12) ausgetragene, verfestigbare Material, wobei die Faserzuführeinrichtung (60) zur Ausrichtung des Faserelements relativ zu einem Baufortschritt des Gegenstands bewegbar ist sowie an der Austragseinheit (12) montiert ist und relativ zur Austragseinheit bewegbar ist,
**dadurch gekennzeichnet, dass** die Faserzuführeinrichtung (60) an der Austragseinheit (12) drehbeweglich gelagert und mittels einer Antriebseinheit (30) drehbar ist.

2. Vorrichtung nach Anspruch 1, **dadurch gekennzeichnet, dass** die Faserzuführeinrichtung (60) zum Zuführen des wenigstens eines Faserelements (61) an die Aufbaustelle (11) zum Einbetten des Faserelements in das von der Austragseinheit (12) ausgetragene, verfestigbare Material von der Austrittsöffnung (12a) für das verfestigbare Material beabstandet ist.

3. Vorrichtung nach Anspruch 1 oder 2, **dadurch gekennzeichnet, dass** die Faserzuführeinrichtung (60) über ein Lagerelement (22) einer Verstelleinrichtung (V) an der Austragseinheit (12) gelagert ist, das konzentrisch zur Austrittsöffnung (12a) der Austragseinheit (12) angeordnet ist.

4. Vorrichtung nach Anspruch 3, **dadurch gekennzeichnet, dass** das Lagerelement (22) durch einen Ring gebildet ist, der ein Antriebsrad, vorzugsweise eine Verzahnung (22a), aufweist, das mit einem Abtriebsrad (30a) der Antriebseinheit (30) in Wirkverbindung steht.

5. Vorrichtung nach einem der vorhergehenden Ansprüche, **dadurch gekennzeichnet, dass** die Faserzuführeinrichtung (60) an der Austragseinheit (12) gelenkig gelagert und mittels einer weiteren Antriebseinheit (31) in Richtung auf den Objektträger (13) zu und vom Objektträger (13) weg bewegbar ist.

6. Vorrichtung nach einem der vorhergehenden Ansprüche, **dadurch gekennzeichnet, dass** die an der Austragsöffnung (12a) angeordnete Faserzuführeinrichtung (60) eine Zwangsführung (20) für das Faserelement (61) zur Aufbaustelle (11) und eine am Ende der Zwangsführung (20) angeordnete Schneideinrichtung (21) aufweist.

7. Vorrichtung nach Anspruch 6, **dadurch gekennzeichnet, dass** die Zwangsführung (20) ein rohrförmiges Element (20a) zum Zuführen des Faserelementes (61) aufweist, in dem das Faserelement (61) mittels Luft oder eines Mikrovorschubs beförderbar ist.

8. Vorrichtung nach einem der vorhergehenden Ansprüche, **dadurch gekennzeichnet, dass** der Endkopf (20b) ein Heizelement (40) umfasst.

9. Vorrichtung nach einem der vorhergehenden Ansprüche, **dadurch gekennzeichnet, dass** das Schneidelement (21) im Endkopf (20b) integriert ist.

10. Verfahren zur Herstellung eines dreidimensionalen Gegenstandes (50) aus wenigstens einem fluidphasigen, verfestigbarem Material, wobei
- das verfestigbare Material aus wenigstens einer Austrittsöffnung (12a) mindestens einer Austragseinheit (12) zum generativen Aufbau des Gegenstands (50) ausgetragen wird und
- mittels wenigstens einer an der Austragseinheit (12) montierten Faserzuführeinrichtung (60) wenigstens ein Faserelement (61) zum Einbetten des Faserelements in das ausgetragene, verfestigbare Material zugeführt wird und relativ zu einem Baufortschritt des Gegenstands ausgerichtet wird sowie mit der Austragseinheit (12) sowie relativ zur Austragseinheit (12) bewegt wird,
**dadurch gekennzeichnet, dass** die Faserzuführeinrichtung (60) an der Austragseinheit (12) mittels einer Antriebseinheit (30) zur Ausrichtung des Faserelements gedreht wird.

11. Verfahren nach Anspruch 10, **dadurch gekennzeichnet, dass** das Faserelement (61) von der konzentrisch zur Austrittsöffnung (12a) der Austragseinheit (12) angeordneten Faserzuführeinrichtung (60) zugeführt wird.

12. Verfahren nach Anspruch 10 oder 11, **dadurch gekennzeichnet, dass** das Faserelement (61) mittels einer weiteren Antriebseinheit (31) in Richtung auf den Objektträger (13) zu und vom Objektträger (13) weg bewegbar und/oder am herzustellenden Gegenstand (50) andrückbar ist.

13. Verfahren nach einem der Ansprüche 10 bis 12, **dadurch gekennzeichnet, dass** das Faserelement an der Austragsöffnung (12a) mittels einer Schneideinrichtung (21) ablängbar ist.

14. Verfahren nach einem der Ansprüche 10 bis 13, **dadurch gekennzeichnet, dass** das Faserelement (61) mittels Luft oder eines Mikrovorschubs in einer Zwangsführung (20) befördert wird.

15. Verfahren nach einem der Ansprüche 10 bis 14, **dadurch gekennzeichnet, dass** das Faserelement (61) in von der Austragseinheit (12) ausgetragene Tropfen des verfestigbaren Materials eingebettet oder zwischen benachbarte Tropfen eingelegt wird.

## Claims

1. A device for producing a three-dimensional article (50) made from at least one fluid-phase solidifiable material, comprising
- at least one discharge unit (12) having at least one discharge opening (12a) for additive discharging of the solidifiable material for constructing the article (50),
- at least one fibre feed device (60) for feeding at least one fibre element (61) for embedding the fibre element in the solidifiable material that is discharged from the discharge unit (12), wherein the fibre feed device (60) is movable in relation to the progress of constructing the article for orienting the fibre element and is mounted on the discharge unit (12) and is movable in relation to the discharge unit,
**characterised in that** the fibre feed device (60) is mounted rotationally movably on the discharge unit (12) and is rotatable by means of a drive unit (30).

2. A device according to Claim 1, **characterised in that**, for feeding the at least one fibre element (61) to the construction point (11) for embedding the fibre element in the solidifiable material that is discharged from the discharge unit (12), the fibre feed device (60) is at a spacing from the discharge opening (12a) for the solidifiable material.

3. A device according to claim 1 or 2, **characterised in that** the fibre feed device (60) is mounted on the discharge unit (12) by way of a bearing element (22) of an adjustment device (V), wherein the bearing element (22) is arranged to be concentric with the discharge opening (12a) of the discharge unit (12).

4. A device according to Claim 3, **characterised in that** the bearing element (22) is formed by a ring that has a drive gear, preferably a toothing (22a), which is in operative connection with an output gear (30a) of the drive unit (30).

5. A device according to one of the preceding claims, **characterised in that** the fibre feed device (60) is mounted on the discharge unit (12) in articulated manner and, by means of a further drive unit (31), is movable in the direction towards and away from the object support (13).

6. A device according to one of the preceding claims, **characterised in that** the fibre feed device (60) arranged at the discharge opening (12a) comprises a positive guidance arrangement (20) for guiding the fibre element (61) to the construction point (11) and a cutting device (21) arranged at the end of the positive guidance arrangement (20).

7. A device according to Claim 6, **characterised in that** the positive guidance arrangement (20) has a tubular element (20a) for feeding the fibre element (61), in which the fibre element (61) is conveyable by means of air or a micro-feed.

8. A device according to one of the preceding claims, **characterised in that** the end head (20b) includes a heating element (40).

9. A device according to one of the preceding claims, **characterised in that** the cutting element (21) is integrated in the end head (20b).

10. A method for producing a three-dimensional article (50) made from at least one fluid-phase solidifiable material, wherein
- the solidifiable material is discharged from at least one discharge opening (12a) of at least one discharge unit (12) for additive manufacturing of the article (50), and
- by means of at least one fibre feed device (60) mounted on the discharge unit at least one fibre element (61) is fed for embedding the fibre element in the discharged solidifiable material and is oriented in relation to the progress of constructing the article and is moved with the discharge unit (12) and in relation to the discharge unit (12).
**characterised in that** for orienting the fibre element the fibre feed device (60) is rotated on the discharge unit (12) by means of a drive unit (30).

11. A method according to Claim 10, **characterised in that** the fibre element (61) is fed by the fibre feed device (60), which is arranged to be concentric with the discharge opening (12a) of the discharge unit (12).

12. A method according to Claim 10 or 11, **characterised in that** the fibre element (61) is movable in the direction towards and away from the object support (13) and/or pressable against the article (50) to be produced by means of a further drive unit (31).

13. A method according to one of Claims 10 to 12, **characterised in that** the fibre element is severable at the discharge opening (12a) by means of a cutting device (21).

14. A method according to one of Claims 10 to 13, **characterised in that** the fibre element (61) is conveyed by means of air or a micro-feed in a positive guidance arrangement (20).

15. A method according to one of Claims 10 to 14, **characterised in that** the fibre element (61) is embedded in drops of the solidifiable material that are discharged from the discharge unit (12) or is inserted between adjacent drops.

## Revendications

1. Dispositif pour la fabrication d'un objet tridimensionnel (50) à partir d'au moins un matériau en phase fluide, durcissable comportant :
- au moins une unité d'application (12) avec au moins une ouverture de sortie (12a) pour l'application générative du matériau durcissable en vue de la réalisation de l'objet (50),
- au moins un dispositif d'apport de fibres (60) pour l'apport d'au moins un élément fibreux (61) en vue de l'incorporation de l'élément fibreux dans le matériau durcissable appliqué par l'unité d'application (12), le dispositif d'apport de fibres (60) étant déplaçable pour l'alignement de l'élément fibreux avec la progression de la réalisation de l'objet et étant monté sur l'unité d'application (12) et déplaçable par rapport à celle-ci,
**caractérisé en ce que** le dispositif d'apport de fibres (60) est monté rotatif sur l'unité d'application (12) et peut être entraîné en rotation au moyen d'une unité d'entraînement (30).

2. Dispositif selon la revendication 1, **caractérisé en ce que** le dispositif d'apport de fibres (60) se trouve à distance de l'ouverture de sortie (12a) pour le matériau durcissable, en vue de l'apport du ou des élément(s) fibreux (61) à l'emplacement de réalisation (11) pour l'incorporation de l'élément fibreux dans le matériau durcissable appliqué par l'unité d'application (12).

3. Dispositif selon la revendication 1 ou 2, **caractérisé en ce que** le dispositif d'apport de fibres (60) est fixé au-dessus d'un élément de support (22) d'un dispositif de réglage (V) sur l'unité d'application (12), lequel élément de fixation étant disposé concentriquement par rapport à l'ouverture de sortie (12a) de l'unité d'application (12).

4. Dispositif selon la revendication 3, **caractérisé en ce que** l'élément de support (22) est formé d'un anneau qui présente une roue d'entraînement, de préférence une denture (22a) qui coopère avec un pignon de sortie (30a) de l'unité d'entraînement (30).

5. Dispositif selon l'une des revendications précédentes, **caractérisé en ce que** le dispositif d'apport de fibres (60) est fixé de manière articulée à l'unité d'application (12) et peut être rapproché ou éloigné du support d'objet (13) au moyen d'un autre dispositif d'entraînement (31).

6. Dispositif selon l'une des revendications précédentes, **caractérisé en ce que** le dispositif d'apport de fibres (60) disposé à l'ouverture d'application (12a) présente un guidage forcé (20) pour apporter l'élément fibreux (61) à l'emplacement de réalisation (11) et un dispositif de coupe (21) disposé à l'extrémité du guidage forcé (20).

7. Dispositif selon la revendication 6, **caractérisé en ce que** le guidage forcé (20) présente un élément tubulaire (20a) pour l'apport de l'élément fibreux (61), dans lequel l'élément fibreux (61) peut être amené au moyen d'air ou d'un micro-dispositif de poussée.

8. Dispositif selon l'une des revendications précédentes, **caractérisé en ce que** la tête d'extrémité (20b) comprend un élément de chauffage (40).

9. Dispositif selon l'une des revendications précédentes, **caractérisé en ce que** l'élément de coupe (21) est intégré à la tête d'extrémité (20b).

10. Procédé de fabrication d'un objet tridimensionnel (50) à partir d'au moins un matériau en phase fluide, durcissable, dans lequel
- le matériau durcissable est appliqué par au moins une ouverture de sortie (12a) d'au moins une unité d'application (12) en vue de la réalisation générative de l'objet (50) et
- au moyen d'au moins un dispositif d'apport de fibres (60) monté sur l'unité d'application (12), au moins un élément fibreux (61) est apporté pour l'incorporation de l'élément fibreux dans le matériau durcissable appliqué et est aligné avec l'avancement de réalisation de l'objet et est déplacé avec l'unité d'application (12) et relativement à l'unité d'application (12),
**caractérisé en ce que** le dispositif d'apport de fibres (60) est entraîné en rotation sur l'unité d'application (12) au moyen d'une unité d'entraînement (30) en vue de l'alignement de l'élément fibreux.

11. Procédé selon la revendication 10, **caractérisé en ce que** l'élément fibreux (61) est apporté par l'unité d'apport de fibres (60) disposée de manière concentrique par rapport à l'ouverture de sortie (12a) de l'unité d'application (12).

12. Procédé selon la revendication 10 ou 11, **caractérisé en ce que** l'élément fibreux (61) peut être rapproché ou éloigné du support d'objet (13) au moyen d'une autre unité d'entraînement (31) et/ou être pressé sur l'objet (50) à fabriquer.

13. Procédé selon l'une des revendications 10 à 12, **caractérisé en ce que** l'élément fibreux peut être coupé au niveau de l'ouverture de sortie (12a) au moyen d'un dispositif de coupe (21).

14. Procédé selon l'une des revendications 10 à 13, **caractérisé en ce que** l'élément fibreux (61) est amené au moyen d'air ou d'un micro-dispositif de poussée dans le guidage forcé (20).

15. Procédé selon l'une des revendications 10 à 14, **caractérisé en ce que** l'élément fibreux (61) est incorporé dans les gouttes du matériau durcissable appliquées par l'unité d'application (12) ou disposé entre des gouttes voisines.
